(19) Europäisches Patentamt
European Patent Office
Office européen des brevets

(11) Veröffentlichungsnummer: **0 211 324**
**A2**

(12) # EUROPÄISCHE PATENTANMELDUNG

(21) Anmeldenummer: 86110091.5

(22) Anmeldetag: 23.07.86

(51) Int.Cl.⁴: C 09 B 29/085
C 09 D 11/02

(30) Priorität: 08.08.85 DE 3528424
09.01.86 DE 3600349

(43) Veröffentlichungstag der Anmeldung: 25.02.87 Patentblatt 87/9

(84) Benannte Vertragsstaaten: CH DE FR GB LI

(71) Anmelder: BAYER AG
Konzernverwaltung RP Patentabteilung
D-5090 Leverkusen 1 Bayerwerk(DE)

(72) Erfinder: Lorenz, Manfred, Dr.
Roggendorfstrasse 51
D-5000 Köln 80(DE)

(72) Erfinder: Hamprecht, Rainer, Dr.
Im Kerberich 25
D-5068 Odenthal(DE)

(72) Erfinder: Haus, Arthur, Dr.
Zum Eschental 8
D-5063 Overath(DE)

(54) **Herstellung von Illustrationstiefdruckfarben.**

(57) Verfahren zur Herstellung von Illustrationstiefdruckfarben, dadurch gekennzeichnet, daß man Farbstoffe der Formel

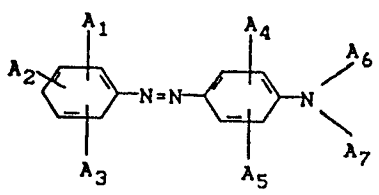

verwendet, wobei $A_1$ bis $A_7$ die in der Beschreibung angegebenen Bedeutungen haben sowie neue, unter die obige Formel fallende Azofarbstoffe.

EP 0 211 324 A2

BAYER AKTIENGESELLSCHAFT 5090 Leverkusen, Bayerwerk
Konzernverwaltung RP
Patentabteilung PG/ABc

Herstellung von Illustrationstiefdruckfarben

Die Erfindung betrifft ein Verfahren zur Herstellung von Illustrationstiefdruckfarben unter Verwendung von Azofarbstoffen.

Bei Illustrationstiefdruckfarben, die z.B. zum Bedrucken von illustrierten Zeitschriften und Versandkatalogen dienen, handelt es sich um niedrigviskose Flüssigkeiten, die vorzugsweise aus 5-10 % Pigment, 25 - 40 % Harz und Lösungsmittel bestehen (siehe Ullmanns Encyklopädie der technischen Chemie, 4. Auflage, Band 10. S. 196; Verlag Chemie, Weinheim 1973). Diese Tiefdruckfarben trocknen durch Verdunsten der Lösungsmittel, wobei das Harz und das Pigment auf dem Druckträger zurückbleiben. Es ist wichtig, daß dabei das Pigment möglichst auf der Oberfläche des Druckträgers verbleibt, da ein zu tiefes Eindringen des farbgebenden Mittels in den Druckträger zu einer Verminderung der scheinbaren Farbintensität führt. Beim Bedrucken von dünnen und ungestrichenen Papieren kann es durch zu tiefes Eindringen des farbgebenden Mittels sogar

zu einem Durchschlagen bis auf die Rückseite des Papiers kommen, wodurch sowohl Farbstärke als auch Glanz beeinträchtigt werden und außerdem ein sauberes Bedrucken der Rückseite erschwert wird. Durch Verwendung von Spezialpigmenten bei der Herstellung von Illustrationstiefdruckfarben werden bedingt durch die Filterwirkung des saugfähigen Untergrunds die Pigmentteilchen auf oder nahe der Oberfläche zurückgehalten, wobei jedoch wegen der niedrigen Viskosität der Druckfarben und das dadurch bedingte rasche Eindringen auch hier Durchschlagserscheinungen auftreten können. Um so mehr ist mit diesen Schwierigkeiten zu rechnen, wenn man an Stelle von Pigmenten lösliche Farbstoffe bei der Herstellung von Illustrationstiefdruckfarben verwendet. Da hierbei die Filterwirkung des Druckträgers entfällt, kann der lösliche Farbstoff besonders leicht und tief eindringen. Dies ist der Grund dafür, daß bisher lösliche Farbmittel beim Illustrationstiefdruckverfahren nur sehr beschränkt Verwendung gefunden haben, z.B. als sogenannte Schönungsfarbstoffe zusammen mit einem überwiegenden Anteil an Pigmenten. Eine größerer Anteil an löslichen Farbstoffen würde insbesondere auf dünnen und saugfähigen Papieren das Durchschlagen und Durchscheinen verursachen.

Es wurde nun überraschenderweise gefunden, daß sich auch Azofarbstoffe der Formel

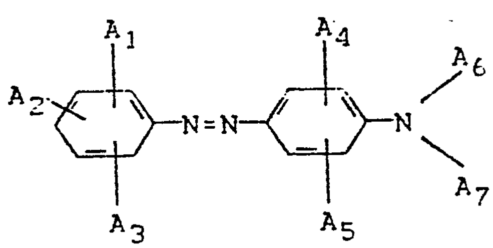

(I)

in der

$A_1$, $A_2$, $A_3$ Wasserstoff, Halogen wie Cl, Br, F, -CN, $-NO_2$, $C_1$-$C_6$-Alkyl, insbesondere Methyl und Ethyl, Cycloalkyl, insbesondere Cyclopentyl und Cyclohexyl, $C_1$-$C_{18}$-Alkoxy, insbesondere Methoxy und Ethoxy, gegebenenfalls substituiertes Phenoxy, gegebenenfalls substituiertes $C_1$-$C_{18}$-Alkylsulfonyl, gegebenenfalls substituiertes Phenylsulfonyl, gegebenenfalls substituiertes Sulfamoyl, gegebenenfalls substituiertes Carbamoyl, gegebenenfalls substituiertes Phenylazo, $C_1$-$C_{18}$-Alkoxycarbonyl, $-CF_3$, -SCN, $C_1$-$C_{12}$-Alkylmercapto, $C_1$-$C_6$-Alkylcarbonyl, gegebenenfalls substituiertes Phenylcarbonyl, -OH,

$A_4$, $A_5$ Wasserstoff, Halogen wie Cl, Br, F, gegebenenfalls substituiertes $C_1$-$C_6$- Alkyl, insbesondere Methyl und Ethyl, gegebenenfalls substituiertes $C_1$-$C_6$-Alkoxy, insbesondere Methoxy und Ethoxy, $-NH-CO-CH_2-CH_2OA_8$, $-NH-CO-A_8$, $-NH-SO_2-A_8$,$NH-CO-O-A_9$, -NH-CO-A-COOH, $-NH-CO-CH_2OA_8$,

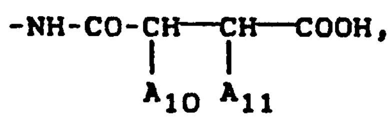,
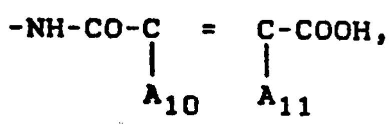,

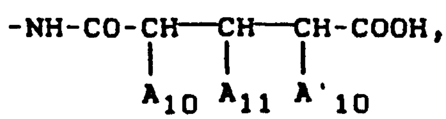,

$A_8$ — $C_1$-$C_{22}$-Alkyl, $C_2$-$C_{22}$-Alkenyl, $C_3$-$C_7$-Cycloalkyl, insbesondere Cyclopentyl und Cyclohexyl, Phenyl, Naphthyl, Phenyl-$C_1$-$C_4$-alkyl, wobei die genannten Arylreste z.B. durch $C_1$-$C_6$-Alkyl, $C_1$-$C_6$-Alkoxy, Cl, Br, F, $-NO_2$ und Cyclohexyl substituiert sein können,

$A_9$ — $C_1$-$C_{22}$-Alkyl, $C_2$-$C_{22}$-Alkenyl, $C_3$-$C_7$-Cycloalkyl, Phenyl-$C_1$-$C_4$-alkyl,

$A_{10}$, $A'_{10}$, $A_{11}$ — Wasserstoff, $C_1$-$C_{22}$-Alkyl, $C_2$-$C_{22}$-Alkenyl, vorzugsweise Dodecenyl,

A — 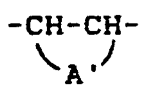 , 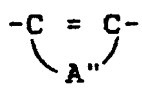 ,

A', A" — die restlichen Glieder eines gegebenenfalls durch $C_1$-$C_4$-Alkyl, insbesondere Methyl, Halogen wie Chlor, Brom, -COOH substituierten carbocyclischen 5- oder 6-gliedrigen Rings,

$A_6$ — Aryl, vorzugsweise gegebenenfalls substituiertes Phenyl oder $A_7$,

$A_7$ — Wasserstoff oder aliphatische Reste, bezeichnen, wobei weiterhin die Reste $A_4$ und $A_6$ auch zu einem, vorzugsweise sechsgliedrigen Ring, z.B. einem Tetrahydrochinolin - oder Benzomorpholin-Ring verbunden sein können und die Reste $A_6$, $A_7$ durch Gruppen $-(CH_2)n-$ (n = 4 oder 5) oder

$-(CH_2)_2-O-(CH_2)_2$ - ringgeschlossen sein können, zur Herstellung von Illustrationstiefdruckfarben eignen.

Die Phenylsulfonyl, Phenoxy, Phenylcarbonyl und Phenylazoreste $A_1$, $A_2$, $A_3$ können z.B. durch $C_1$-$C_6$-Alkyl, $C_1$-$C_6$-Alkoxy, Cl, Br, F und $-NO_2$ , Cyclohexyl substituiert sein.

Die $C_1$-$C_{18}$-Alkylsulfonylreste $A_1$, $A_2$, $A_3$ können z.B. durch $C_1$-$C_6$-Alkoxy substituiert sein. Beispielhaft seien $C_1$-$C_6$-Alkoxy-$C_1$-$C_6$-alkylsulfonyl-Reste genannt.

Die Sulfamoyl- und Carbamoylgruppen $A_1$, $A_2$, $A_3$ können z.B. durch einen oder zwei $C_1$-$C_{18}$-Alkylrest(e) substituiert sein, die weiter durch -OH, -CN oder einen Rest

-O-CO-A-COOH, 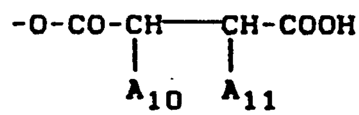 und 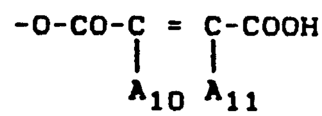

sein können.

Die $C_1$-$C_6$-Alkylreste $A_4$, $A_5$ können z.B. durch -COOH und $C_1$-$C_6$-Alkoxy-carbonyl substituiert sein. Die $C_1$-$C_6$-Alkoxyreste $A_4$, $A_5$ können z.B. durch $C_1$-$C_4$-Alkoxy substituiert sein. Die Phenylreste $A_6$ können z.B. durch $C_1$-$C_6$-Alkyl, $C_1$-$C_6$-Alkoxy, Cyclohexyl, Cl, Br, F und $-NO_2$ substituiert sein.

Bevorzugte Reste A sind:

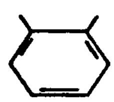 , 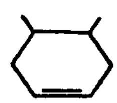 , 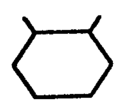 , 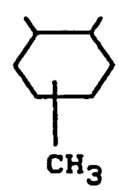 .

Bei den aliphatischen Resten $A_6$, $A_7$ handelt es sich vorzugsweise um gegebenenfalls durch nicht-nachbarständige O-Atome unterbrochene und/oder substituierte $C_1$-$C_{22}$-Alkyl- und $C_2$-$C_{22}$-Alkenylreste oder um $C_3$-$C_7$-Cycloalkylreste. Als Substituenten dieser Alkyl- und Alkenylreste kommen beispielsweise in Betracht:

$-OH$, $-CN$, $-O-CO-A-COOH$, $-O-CO-\underset{A_{10}}{\underset{|}{CH}}-\underset{A_{11}}{\underset{|}{CH}}-COOH$,

$-O-CO-\underset{A_{10}}{\underset{|}{C}}=\underset{A_{11}}{\underset{|}{C}}-COOH$, $-O-CO-A_8$, $-O-COO-A_9$, $-COOA_9$, $-OA_{12}$,

wobei

A, $A_8$, $A_9$, $A_{10}$ und $A_{11}$ die zu Formel I angegebenen Bedeutungen haben und

$A_{12}$ für $C_3$-$C_7$-Cycloalkyl, insbesondere Cyclopentyl und Cyclohexyl, Phenyl, Naphthyl und Phenyl-$C_1$-$C_4$-alkyl steht.

Bevorzugte Reste $A_6$, $A_7$ sind:

Wasserstoff, gegebenenfalls durch -CN oder -OH substituiertes $C_1$-$C_{22}$-Alkyl, $C_2$-$C_{22}$-Alkenyl, $C_3$-$C_7$-Cycloalkyl,

$-CH_2-\underset{OA_{13}}{\underset{|}{CH}}-A_{14}$, $-CH_2CH_2-COOA_9$, $-(CH_2)_n-\underset{A_{15}}{\underset{|}{CH}}-O-\underset{CH_3}{\underset{|}{CH}}-OA_8$,

$-(CH_2CH_2-O)_m-CO-A_8$, $-(CH_2CH_2O)_m-A_{15}$,

wobei

$A_{13}$ H, -CO-A-COOH, 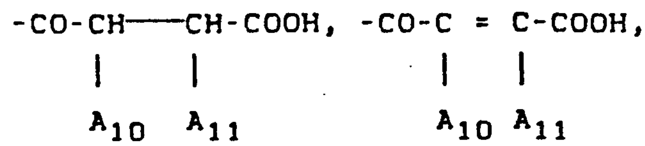

$A_{14}$ Wasserstoff, $C_1$-$C_8$-Alkyl, $-CH_2-O-A_8$,

$A_{15}$ Wasserstoff oder $C_1$-$C_8$-Alkyl,

n 1, 2 oder 3 und

m 1, 2, 3, 4, 5, 6, 7, 8, 9 oder 10 bezeichnen und

$A_8$, $A_{10}$, $A_{11}$ und A die zu Formel I angegebenen Bedeutungen haben.

Folgende Verbindungen gemäß Formel I werden bevorzugt eingesetzt:

1. Verbindungen, bei denen

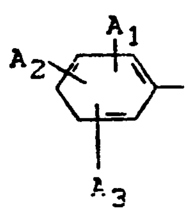 für 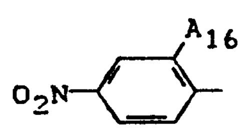 ,

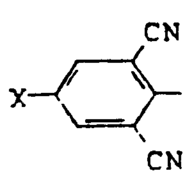 , 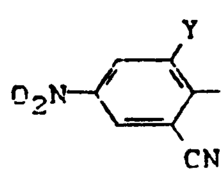

oder 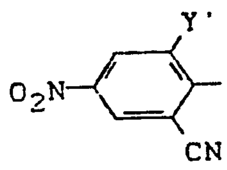

steht, wobei $A_{16}$, Cl, Br, CN,

X H, $CH_3$, $C_2H_5$, $C_6H_{12}$, tert.-Butyl, $C_1$-$C_4$-Alkoxy, Cl, Br,

Y $-NO_2$, -CN, $-CF_3$, $C_1$-$C_{12}$-Alkylsulfonyl und

Y' $-NO_2$, -CN bezeichnen.

2. Verbindungen, bei denen

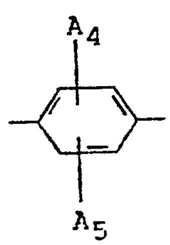 für 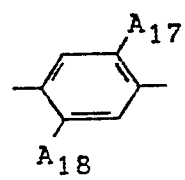

steht, wobei

$A_{17}$ Wasserstoff, Chlor, $C_1$-$C_4$-Alkyl, insbesondere Methyl und Ethyl und $C_1$-$C_4$-Alkoxy, insbesondere Methoxy und Ethoxy bezeichnet,

$A_{18}$ für $-NH-CO-CH_2CH_2-OA_8$, $-NH-CO-A_8$, $-NH-CO-O-A_9$, $-NH-COCH_2-OA_8$, -NH-CO-A-COOH,

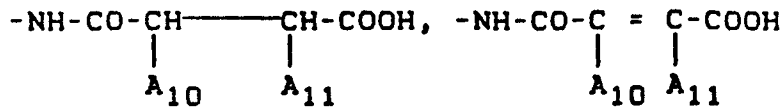

steht und

A, $A_8$, $A_9$, $A_{10}$ und $A_{11}$ die zu Formel I angegebene Bedeutung haben.

Somit werden Verbindungen der Formeln

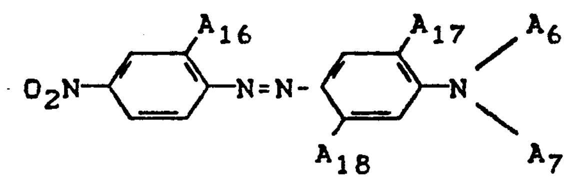

(II)

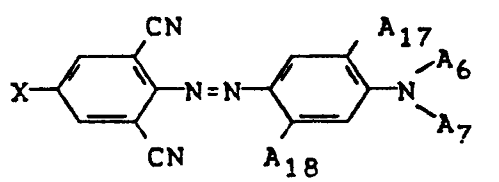

(IIa)

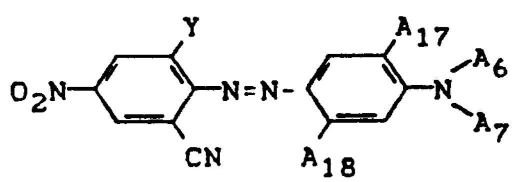

(IIb)

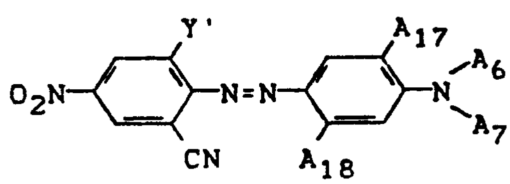

(IIc)

mit den o.a. Bedeutungen für $A_6$, $A_7$, $A_{16}$, $A_{17}$ , $A_{18}$, X, Y und Y' besonders bevorzugt eingesetzt.

- Besonders bevorzugt stehen

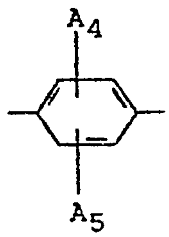 bzw. 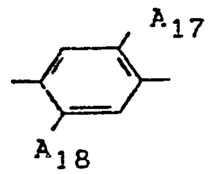 für

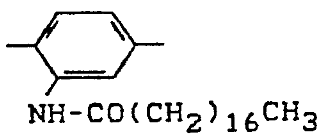 , 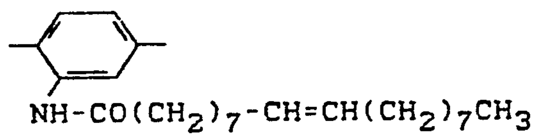 ,

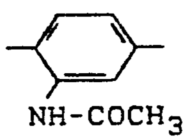 , 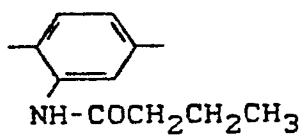 , 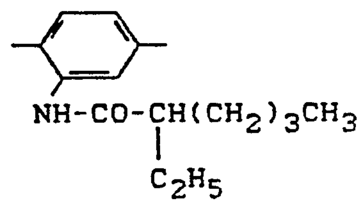

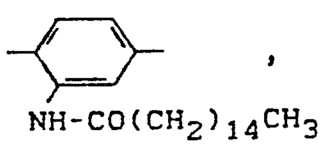 , 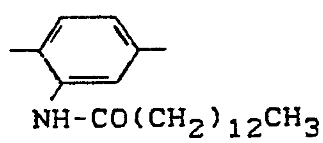

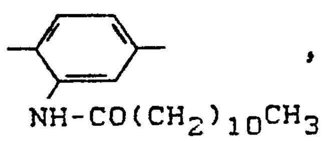 ,

sowie

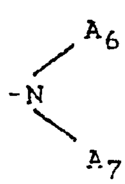

für $-N(C_2H_5)_2$, $-N(C_3H_7)_2$, $-N(CH_3)_2$

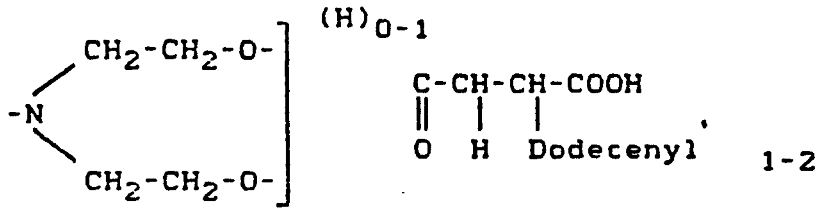

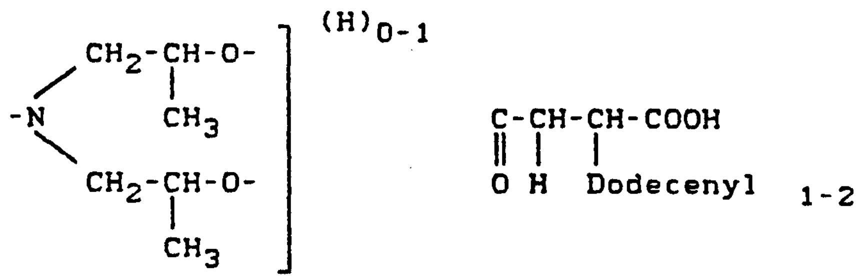

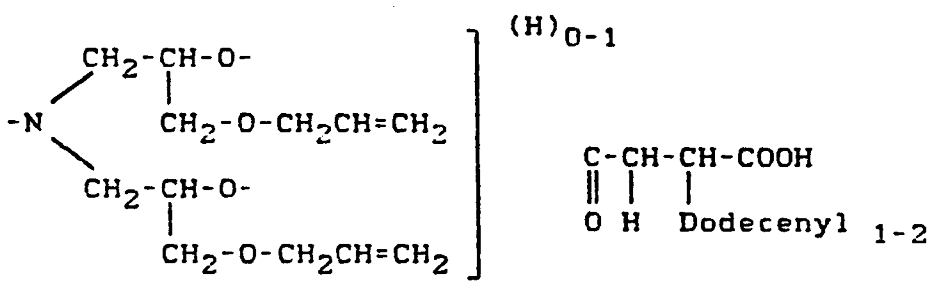

Die letztgenannten Reste werden durch Umsetzung der entsprechenden -OH-Verbindungen mit Dodecenylbernsteinsäureanhydrid eingeführt.

Die Verbindungen der Formel I sind bekannt oder können in Analogie zu literaturbekannten Verfahren hergestellt werden (s. z.B. DE-PS 655 590, EP-A 2 73382,

0211324

CH-PS 567 067, DE-OS 1 544 386, DE-OS 28 15 506, DE-OS 1 544 386, DE-OS 2 129 590, IT 886 176).

Die Erfindung betrifft weiterhin neue Farbstoffe der Formeln

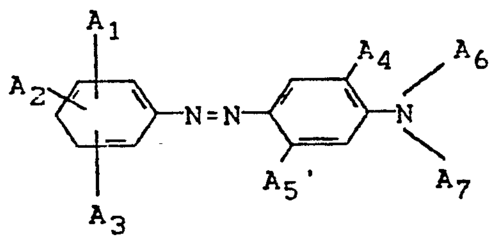

(III)

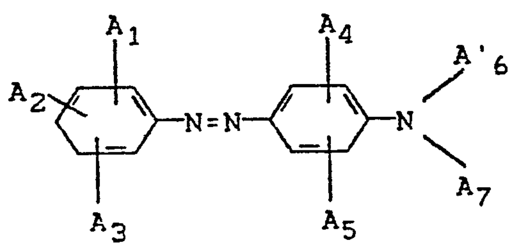

(IV)

bei denen

$A_5$' für 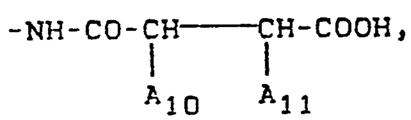

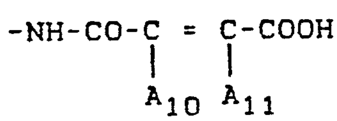 und

$A_6$' für einen gegebenenfalls durch -O-CO-A-COOH,

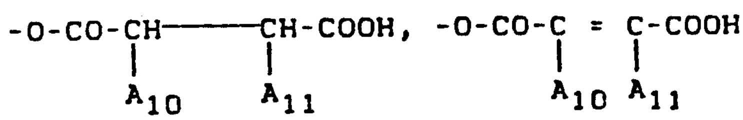 substituierten $C_1$-$C_{22}$-Alkyl- oder $C_2$-$C_{22}$-Alkenylrest oder insbesondere einen Rest

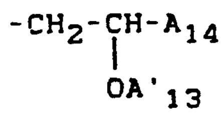 steht,

wobei

A'$_{13}$ -CO-A-COOH, 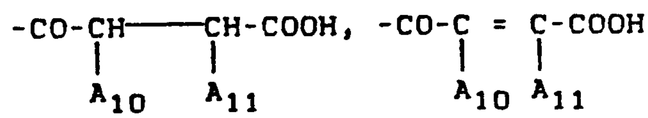

bezeichnet und

$A_1$, $A_2$, $A_3$, $A_4$, $A_5$, $A_6$, $A_7$, A, $A_{10}$, $A_{11}$, $A_{14}$ die oben angegebene Bedeutung haben.

Bevorzugte Verwendung bei der Herstellung von Illustrationstiefdruckfarben finden solche Verbindungen der Formel I, bei denen der Massenanteil am Farbstoffmolekül derjenigen Kohlenwasserstoffreste, die nicht unmittelbar an die Azogruppe gebunden sind wenigstens 20 %, besonders bevorzugt wenigstens 25 %, ganz besonders bevorzugt wenigstens 30 % beträgt.

Die Berechnung der Auswahl dieser Verbindungen sei an zwei Beispielen erläutert:

α)

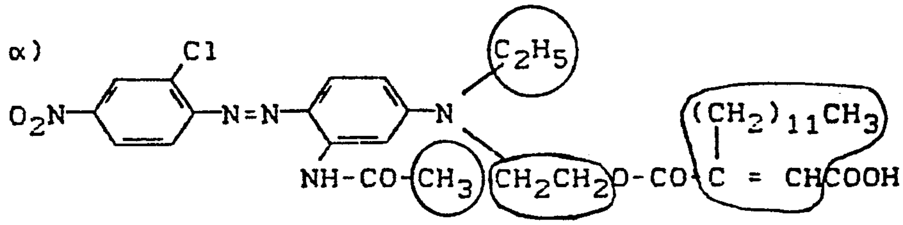

β)

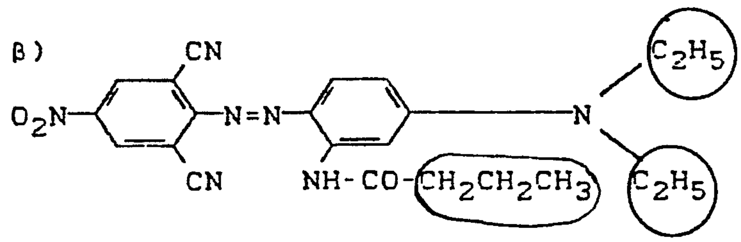

In den Formeln α) und β) wurden die nicht unmittelbar an die Azogruppe gebundenen Kohlenwasserstoffreste markiert.

In Formel α) beträgt der Masseanteil dieser Reste an der Gesamtmasse des Moleküls 39,6 % und in Formel β) 23,8 %.

Die unter Verwendung der Farbstoffe der Formel I hergestellten Illustrationstiefdruckfarben enthalten bezogen auf das Gewicht der Komponenten A), B) und C), vorzugsweise

A) etwa 2 bis etwa 20 Gew.-% Farbmittel,
B) etwa 10 bis etwa 40 Gew.-% Harz und
C) etwa 80 bis etwa 50 Gew.-% Lösungsmittel.

Das Farbmittel kann auch ein Gemisch verschiedener Farbstoffen der Formel I sowie insbesondere auch ein Gemisch aus mindetens einem Farbstoff der Formel I und mindestens einem für Illustrationstiefdruckfarben geeigneten Pigment

sein. Die letztgenannten Mischungen können bis zu 90 Gew.-% bevorzugt bis zu 50 Gew.-% Pigment enthalten.

Bei Pigmenten, die sich zur Herstellung von Mischungen der Farbstoffe der Formel I mit Pigmenten eignen, handelt es sich bevorzugt um Rotpigmente wie C.I. Pigment Red 2, 53, 57:1, 112, 122, 146 und 148. Daneben kommen zur Erzeugung von besonderen Nuancen auch Mischungen mit Pigmenten mit anderem Farbton infrage, z.B. C.I. Pigment Yellow 12, 13, 14, 17, 74 und 83, C.I. Pigment Orange 5 und 34, C.I. Pigment Violet 19, C.I. Pigment Blue 15 und 27, C.I. Pigment Green 7 und 36 sowie C.I. Pigment Black 7. Die Farbstoffe der Formel I können, auch zum Nuancieren der genannten Pigmente verwendet werden.

Geeignete Harze sind z.B. Gilsonite-Asphalt, kolophoniummodifizierte Harze, z.B, Kalk-, Zink- und Magnesiumsalze von Harzsäuren und ihren Umwandlungsprodukten, Harzester, Maleinatharze, kolophonium-modifizierte Phenolharze, Kohlenwasserstoffharze, Ketonharze, Chlorkautschuk, Nitrocellulose, Polyamidharze, Schellack, Vinylharze u.a.

Geeignete Typen werden z.B. in Karsten, Lackrohstofftabellen, 7. Aufl., Curt R. Vincentz Verlag, angeführt.

Als Lösungsmittel kommen aromatische und aliphatische Kohlenwasserstoffe wie Leichtbenzinsorten, $C_5$-$C_8$-aliphatische Kohlenwasserstoffe, Xylol und besonders bevorzugt Toluol in Betracht.

0211324

Es können auch Mischungen von aliphtischen und aromatischen Kohlenwasserstoffen eingesetzt werden.

Die vorliegende Erfindung betrifft bevorzugt die Verwendung von Farbstoffen der Formel I bei der Herstellung von Illustrationstiefdruckfarben auf Toluolbasis.

Zur Herstellung der Illustrationstiefdruckfarben werden die Farbstoffe der Formel I, gegebenenfalls im Gemisch mit Pigmenten, in üblicher Weise in die Druckfarbenansätze eingearbeitet.

Vorteilhafterweise können beim erfindungsgemäßen Verfahren zur Herstellung von Illustrationstiefdruckfarben zusätzlich zu dem Farbstoff der Formel I anorganische Zuschlagstoffe mit einer spezifischen Oberfläche nach BET von mindestens 50 $m^2/g$, bevorzugt mindestens 100 $m^2/g$, besonders bevorzugt mindestens 200 $m^2/g$ zugesetzt werden.

Als Zuschlagstoffe haben sich insbesondere Aluminiumhydroxide und ganz besonders Kieselsäure bewährt. Die Zuschlagstoffe werden vorzugsweise in Mengen von 0,2 - 2 Gew.-%, bezogen auf das Druckfarbengewicht besonders bevorzugt 0,4 - 0,9 Gew.-% eingesetzt.

Durch diese Zusätze gelingt es, die Durchschlagsneigung der Farbstoffe weiter zu verringern, wobei Ergebnisse erzielt werden, wie sie sonst nur bei der alleinigen Verwendung von Pigmenten erreicht werden können.

Bei den vorzugsweise eingesetzten feindispersen Kieselsäuren handelt es sich um überwiegend amorphe, mehr oder weniger vernetzte, feinteilige Kieselsäuren mit der o.a. spezifischen Oberflächen. Solche Kieselsäuren sind z.B. aus Ullmanns Encyklopädie der technischen Chemie, 4. Auflage, Band 21, S. 451-476 bekannt. Die Kieselsäuren können z.B. durch Fällung aus Lösungen oder nach pyrogenen Verfahren erhalten werden; sie können neben überwiegend Kieselsäure auch noch andere Metalloxide und -hydroxide enthalten, z.B. solche des Aluminiums und Titans.

Die Kieselsäuren müssen in der Tiefdruckfarbe dispergiert sein. Diese Dispergierung kann in der fertigen Tiefdruckfarbe oder in einem Konzentrat erfolgen. Es ist jedoch auch möglich, zunächst eine Dispersion in dem für die Tiefdruckfarbe verwendeten Lösungsmittel gegebenenfalls auch in höherer Konzentration herzustellen, wobei man bereits einen Teil oder auch das gesamte Harz zusetzen kann. Geeignete Dispergieraggregate sind z.B.: Rührer, Schnellrührer, Dissolver, Perlmühlen und Kugelmühlen oder eine Kombination dieser Aggregate.

Weiterhin kann es vorteilhaft sein, zusätzlich zu den Kieselsäuren noch Netz- und Dispergiermittel für diese zuzusetzen. Besonders geeignete Dispergiermittel sind die Salze starker organophiler Säuren mit aliphatischen Aminen und Polyaminen, die gegebenenfalls Hydroxylgruppen enthalten.

Starke organophile Säuren sind z.B.: $C_{10}$-$C_{20}$-Alkansulfonsäuren, Alkylarylsulfonsäuren wie Dodecylbenzolsulfonsäure, Di-tert.-butylnaphthalinsulfonsäuren, Schwefelsäure-monoester oder Phosphorsäure-mono- oder -diester von Alkanolen oder deren Umsetzungsprodukten mit Ethylenoxid. Solche Alkanole sind z.B. gesättigte oder ungesättigte, geradkettige oder verzweigte $C_4$-$C_{22}$-aliphatische Alkohole wie Butanol, 2-Ethylhexanol, Dodecanol, Tetra-, Hexa- und Octadecylalkohol, Oleylalkohol sowie die Umsetzungsprodukte dieser Alkohole mit 1-20 Mol Ethylen- oder Propylenoxid.

Geeignete aliphatische Amine sind z.B.:

Ethylendiamin, Amine der Formel $H_2N(CH_2CH_2NH)_nH$, mit n = 2-6, Propylendiamin, Dipropylendiamin, Talgfettpropylendiamin. Als hydroxylgruppenhaltige Amine kommen z.B. solche in Frage, wie sie bei der Umsetzung von Ammoniak oder $C_1$-$C_{20}$-Alkylmono-, -di- oder -polyaminen mit Ethylen- oder Propylenoxid oder mit Epichlorhydrin entstehen.

Beispiele hierfür sind: Ethanolamin, Di- und Triethanolamin, Tris-[2-(2-hydroxyethoxy)-ethyl]-amin, Bis-/[(2-hydroxyethoxy)-ethyl]-amin, Bis-(2-hydroxyethyl)-methyl-, -ethyl-, -propyl- oder -butylamin, 2-(2-Aminoethylamino)-ethanol, 2-(Hydroxyethyl)-bis-(2-hydroxypropyl)-amin, Tris-(2-hydroxypropyl)-amin, 3-[Bis-(2-hydroxyethyl)-amino]-propylamin, Pentahydroxyethyl-diethylen-triamin, 2,3-Dihydroxypropylamin; die Umsetzungsprodukte von Kokosfettamin, Talgfettamin, Stearylamin und Oleylamin mit 2 Mol Ethylenoxid odervon Talgfettpropylendiamin mit 3 Mol Ethylenoxid.

Diese Dispergiermittel werden in Mengen zwischen 10 und 200 Gew.-%, bevorzugt 50 und 100 Gew.-%, bezogen auf die Kieselsäure zugesetzt.

Als weitere feindisperse Zusatzstoffe kommen z.B. feindisperse Aluminiumhydroxide oder die weitgehend röntgenamorphen Aluminiumhydroxidgele in Frage, wie sie z.B. durch Fällen aus sauren Aluminiumsalzlösungen mit Basen oder nach dem Verfahren der Flammenhydrolyse erhalten werden können. Bevorzugte Aluminiumhydroxide haben eine spezifische Oberfläche nach BET von wenigstens ca. 50 $m^2/g$. Sie können auf gleiche Weise und unter Zusatz der gleichen Dispergiermittel dispergiert werden, wie es vorstehend für die Kieselsäuren beschrieben wurde. Auch Mischungen aus feindispersen Aluminiumhydroxiden und Kieselsäuren können erfindungsgemäß verwendet werden.

Das Eindringen bzw. Durchschlagen einer Druckfarbe kann man prüfen, indem man das Durchscheinen oder Durchschlagen eines Drucks oder Aufstriches der Druckfarbe auf dem Bedruckstoff z.B. einem Druckpapier von der Rückseite visuell oder farbmetrisch beurteilt.

Das Durchschlagen fällt besonders ins Gewicht bei den zunehmend verwendeten, preiswerten Papierqualitäten mit einem Papiergewicht von 42 $g/m^2$ oder weniger.

Die erfindungsgemäßen neuen Farbstoffe können darüber hinaus zum Färben von Oberflächenbelägen, weiteren organischen Lösungsmitteln und Mineralölprodukten Verwendung finden, weil sie sich durch eine unerwartet hohe Löslichkeit in diesen Medien auszeichnen. Einzelne Substrate, die mit den neuen Farbstoffen gefärbt werden können, sind z.B. Druckfarben auf Basis von Estern, Ketonen, Glykolen, Glykolethern und Alkoholen, wie Essigsäureethylester, Essigsäurebutylester, Essigsäuremethoxyethylester, Aceton, Methylethylketon, Methylglykol, Methyldiglykol, Butyldiglykol, Ethanol, Propanol, Butanol, Phthalsäurebutylester und Phthalsäureethylester, oder Schreibtinten, Heiz- und Dieselöle sowie allgemein organische Lösungsmittel.

Insbesondere können die neuen Farbstoffe gegebenenfalls in Mischungen mit Pigmente auch zur Herstellung von Flexo- und Verpackungstiefdruckfarben dienen. Dabei können die neuen Farbstoffe auch in den beschriebenen Zubereitungen enthaltend einen feindispersen anorganischen Zusatzstoff eingesetzt werden.

Beispiel 1

17,3 g (0,1 Mol) 2-Chlor-4-nitro-anilin werden über Nacht mit einer Mischung von 40 ml Wasser und 35 ml 10 N Salzsäure verrührt. Durch Eiseinwerfen wird die Mischung auf $0^{o}$ C gebracht und mit einer wäßrigen Lösung von 7,0 g Natriumnitrit diazotiert. Der Ansatz wird 2 Std. bei 0-$5^{o}$ C gerührt und dabei stets ein Nitritüberschuß aufrechterhalten. Danach wird die überschüssige salpetrige Säure mit Amidosulfonsäure zerstört. Hierzu gibt man eine Lösung von 45,6 g N-[3-(Dipropylamino)phenyl]-oleoylamid in Form des Hydrochlorides in 50 ml Eisessig. Im Verlauf von 5 Std. ist die Kupplung beendet. Der Niederschlag wird abgesaugt und gut mit Wasser gewaschen. Die feuchte Paste wird mit 300 ml Toluol aufgenommen und die Lösung mit 200 ml einer 1 N Sodalösung gewaschen. Die organische Phase wird abgetrennt und das Toluol abdestilliert. Der verbleibende Rückstand (61,8 g) wird in 60 g Toluol gelöst. Man erhält eine 50 %ige Lösung eines Farbstoffes der Formel

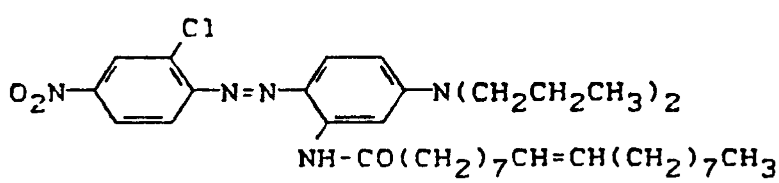

10 g der Farbstofflösung, 69,5 g Toluol und 25,5 g Alsynol KZ 71, einem Kohlenwasserstoffharz der Firma Synres, werden gemischt. Man erhält eine Toluoltiefdruckfarbe mit einer Viskosität, die einer Auslaufzeit von 23 Sekunden im DIN 3 Becher nach DIN 53 211 entspricht. Mit dieser Druckfarbe werden auf einem Dürner Tiefdruck Handandruckgerät Tiefdruckpapiere bedruckt, wobei sehr farbstarke blaustichig rote Drucke erhalten werden. Beim Beurteilen dieser Drucke zeigt sich, daß die Druckfarbe bereits ein recht gutes Durchschlagverhalten aufweist.

Lediglich auf sehr leichten Papieren wird ein gegenüber ausschließlich mit Hilfe von Pigmenten hergestellten Druckfarben gleicher Viskosität ein etwas schlechteres Durchschlagverhalten gefunden.

Beispiel 2

Man stellt analog zu Beispiel 1 eine Druckfarbe her, die aus 10 g der Farbstofflösung nach Beispiel 1, 70 g Toluol und 25 g Alsynol KZ 71 besteht und die zusätzlich noch 0,8 g Aerosil 380, einer feindispersen Kieselsäure der Firma Degussa, dispergiert enthält. Die Druckfarbe entspricht in ihren Eigenschaften der Druckfarbe nach Beispiel 1, jedoch ist das Durchschlagverhalten auch beim Bedrucken von Papieren mit niedrigem Flächengewicht einwandfrei.

Ähnliche Ergebnisse erhält man, wenn man anstelle von Aerosil 380, Aerosil 300, Aerosil 200 oder HDKT 40, einer fein dispersen Kieselsäure der Firma Wacker Chemie,. einsetzt.

Die genannten Kieselsäuren haben spezifische Oberfläche nach BET von 380, 300, 200 bzw. 400 $m^2/g$.

Analog den Beispielen 1 und 2 werden Druckfarben mit Hilfe der aus den in der nachfolgenden Tabelle aufgeführten Komponenten hergestellten Farbstoffe mit ähnlichen Eigenschaften erhalten:

| Bsp. Nr. | Diazokomponente | Kupplungskomponente | Farbton des Druckes |
|---|---|---|---|
| 3 | 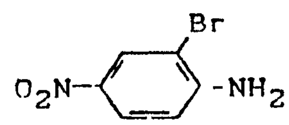 | 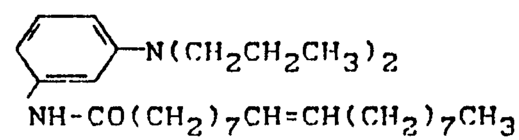 | blaustichig rot |
| 4 | 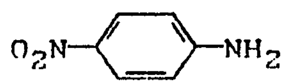 | " | rot |
| 5 | 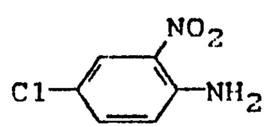 | " | rot |
| 6 | 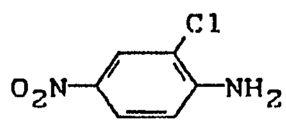 | 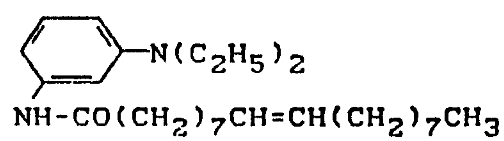 | blaustichig rot |

| Bsp. Nr. | Diazokomponente | Kupplungskomponente | Farbton des Druckes |
|---|---|---|---|
| 7 | 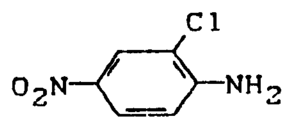 | 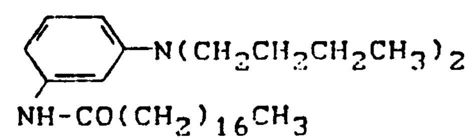 | blau-stichig rot |
| 8 | " | 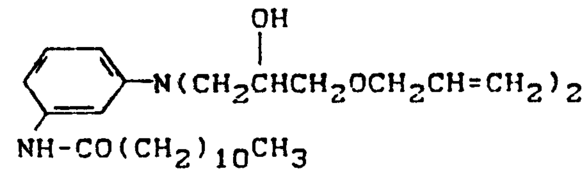 | " |
| 9 | " | 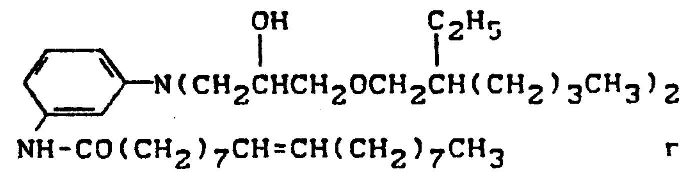 | rot |
| 10 | 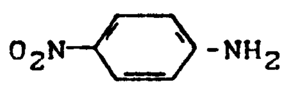 | 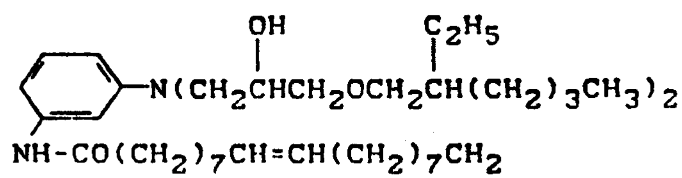 | rot |

| Bsp. Nr. | Diazokomponente | Kupplungskomponente | Farbton des Druckes |
| --- | --- | --- | --- |
| 11 | 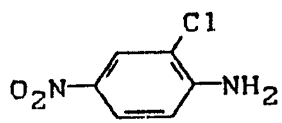 | 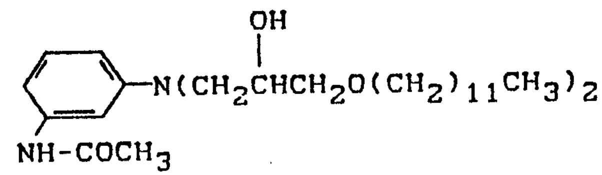 | blau- stichig rot |
| 12 | 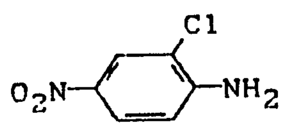 | 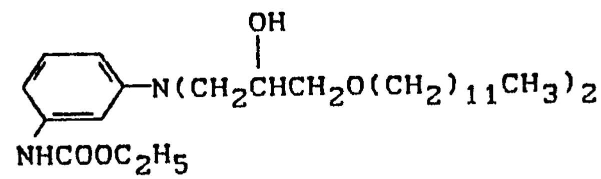 | " |
| 13 | 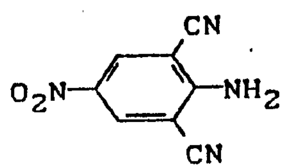 | 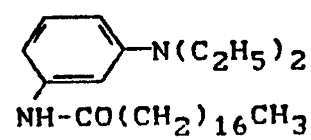 | blau |
| 14 | 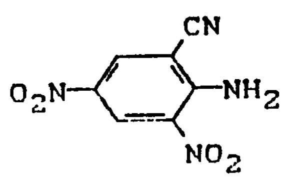 | 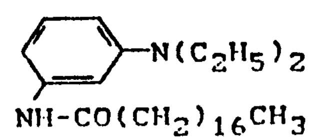 | blau |

| Bsp. Nr. | Diazokomponente | Kupplungskomponente | Farbton des Druckes |
|---|---|---|---|
| 15 | 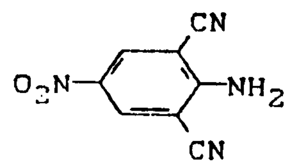 | 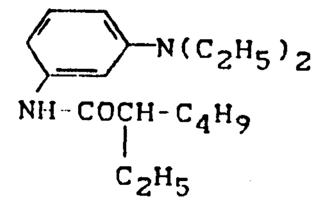 | blau |
| 16 | 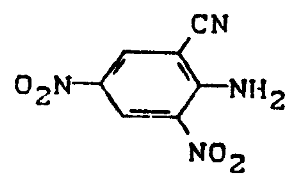 | 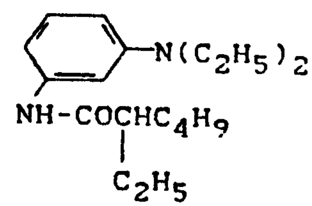 | blau |

Beispiel 17

37,9 g eines durch Kuppeln von diazotiertem 2-Chlor-4-nitroanilin mit N,N-Bis-(2-hydroxyethyl)-3-methylanilin erhaltenen Farbstoffes, 200 ml Toluol und 58,6 g Fibran 68, einem Dodecenylbernsteinsäureanhydrid (Gemisch) der Firma National Starch, werden 12 Std. unter Rückfluß erhitzt und danach ein Teil des Toluol abdestilliert. Man erhält 135 g einer dunkel gefärbten Lösung eines Farbstoffgemisches der allgemeinen Formel

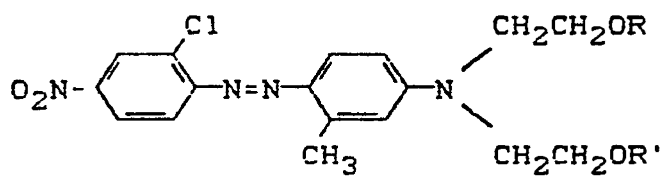

wobei die Reste R und R' für Dodecenylbernsteinsäurehalbestergruppierungen stehen.

Analog zu den Beispielen 1 und 2 hergestellte Druckfarben ergeben rote Drucke mit ganz ähnlichen Eigenschaften wie die dort beschriebenen.

Nach dem im Beispiel 17 beschriebenen Verfahren wurden die in der folgenden Tabelle aufgeführten Farbstoffe mit den ebenfalls in der Tabelle angegebenen Anhydriden umgesetzt. Die aus den so erhaltenen neuartigen Estern hergestellten Druckfarben waren in ihren Eigenschaften mit den nach den Beispielen 1 und 2 hergestellten vergleichbar.

| Bsp. Nr. | Farbstoff | Anhydrid | Farbton des Druckes |
|---|---|---|---|
| 18 | 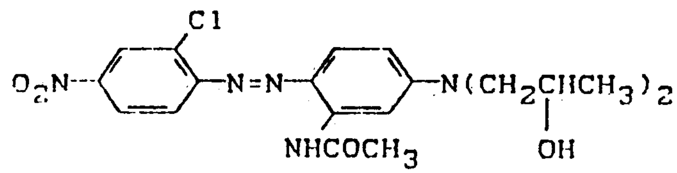 | Fibran | blaustichig rot |
| 19 | " | 4-Methyl-hexahydrophthal-säureanhydrid (= MHPA) | " " |
| 20 | 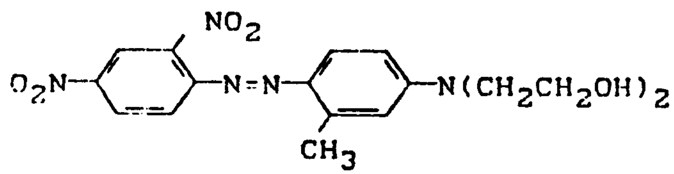 | MHPA | blaustichig rot |
| 21 | " | Fibran | " " |
| 22 | 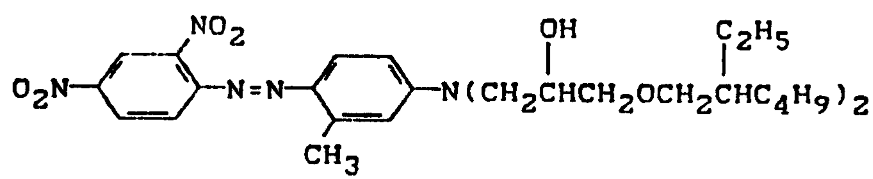 | Phthalsäureanhydrid | " " |

| Bsp. Nr. | Farbstoff | Anhydrid | Farbton des Druckes |
|---|---|---|---|
| 23 | 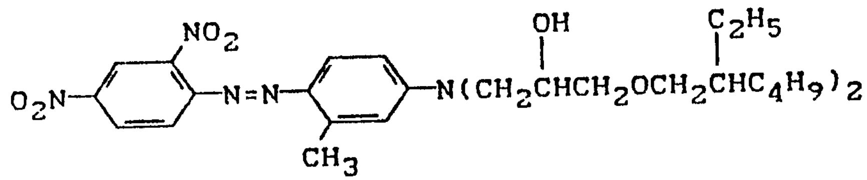 | MHPA | blaustichig ro |
| 24 | 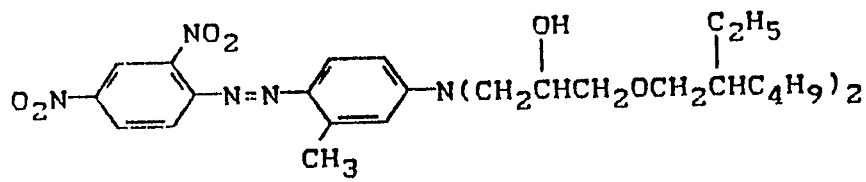 | Hexahydrophthalsäureanhydrid | " " |
| 25 | 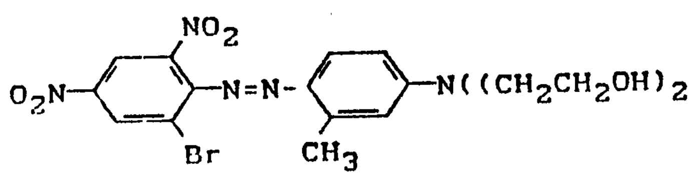 | Fibran | " " |
| 26 | 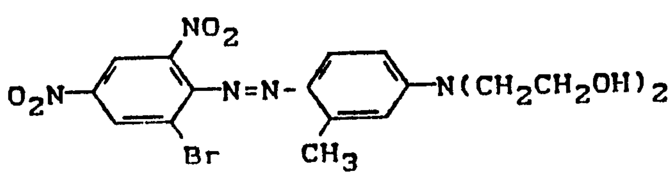 | MHPA | " " |

| Bsp. Nr. | Farbstoff | Anhydrid | Farbton des Druckes |
|---|---|---|---|
| 27 | 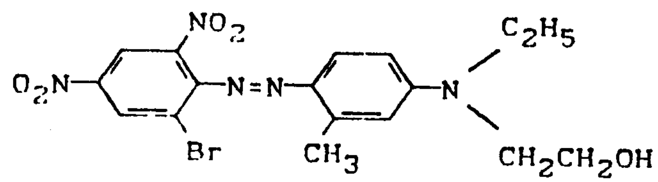 | Fibran | violett |
| 28 | 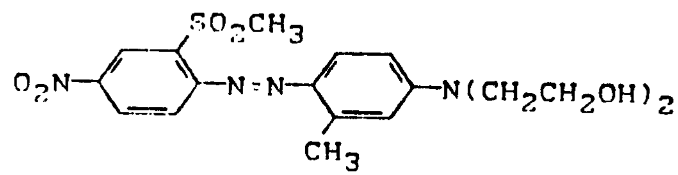 | " | rot |
| 29 | 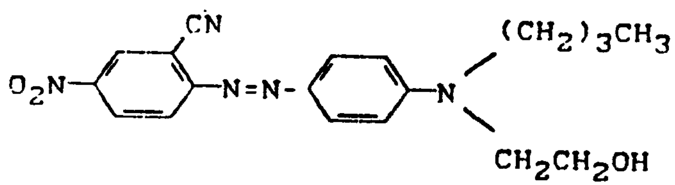 | " | rot |

Ebenfalls gut geeignete Druckfarben konnten mit Hilfe der Farbstoffe der folgenden Tabelle 3 hergestellt werden.

Tabelle 3:

| | | Farbton des Druckes |
|---|---|---|
| Bsp. 30 | 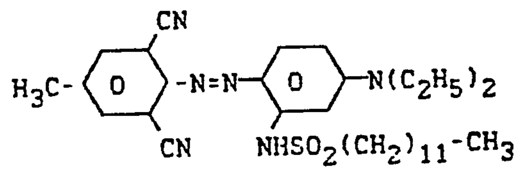 | blaust. rot |
| Bsp. 31 | 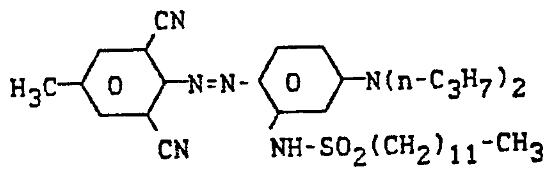 | " |
| Bsp. 32 | 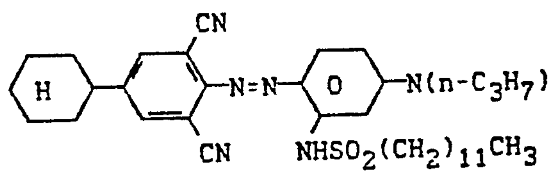 | " |
| Bsp. 33 | 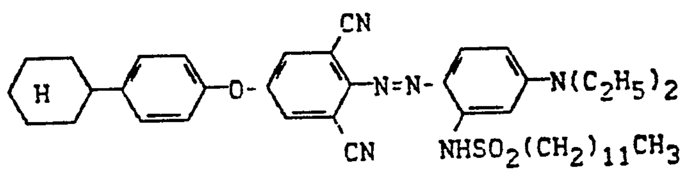 | " |
| Bsp. 34 | 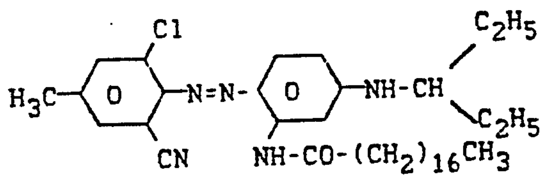 | " |
| Bsp. 35 | 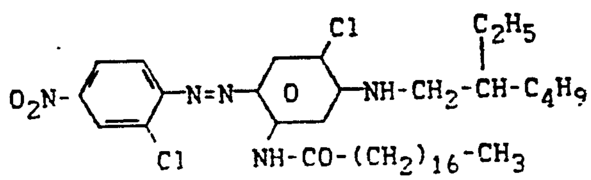 | rot |
| Bsp. 36 | 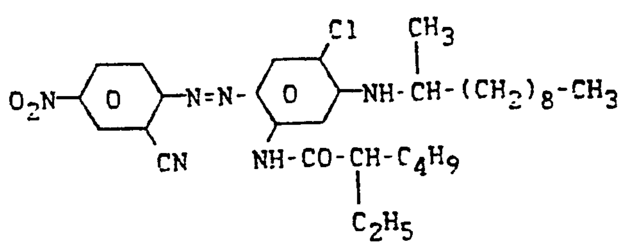 | blaust. rot |

Tabelle 3 (Fortsetzung)

| | | Farbton des Druckes |
|---|---|---|
| Bsp. 37 | 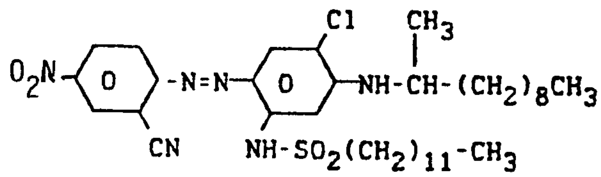 | blaust. rot |
| Bsp. 38 | 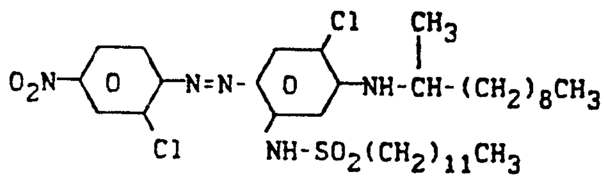 | rot |
| Bsp. 39 | 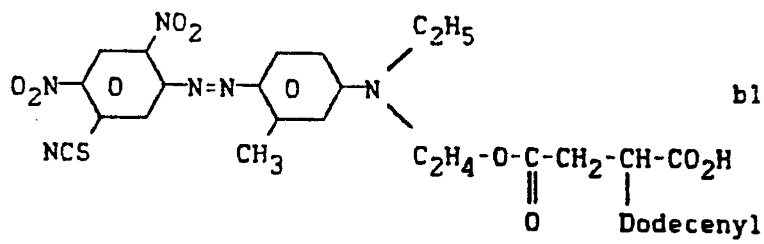 | blau |
| Bsp. 40 | 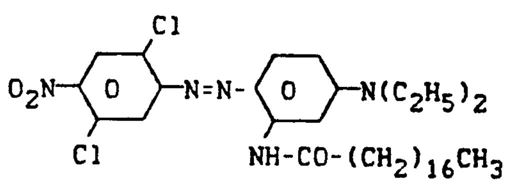 | Rubin |
| Bsp. 41 | 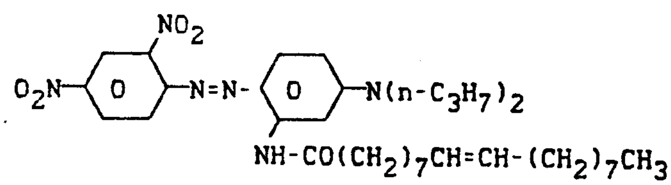 | Violett |
| Bsp. 42 | 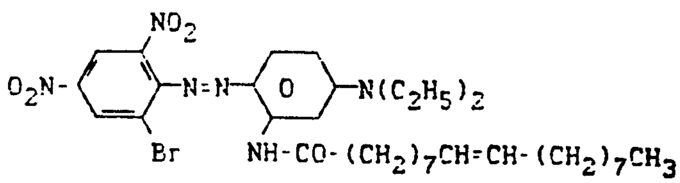 | rotst. Blau |

Tabelle 3 (Fortsetzung)

| | | Farbton des Druckes |
|---|---|---|
| Bsp. 43 | 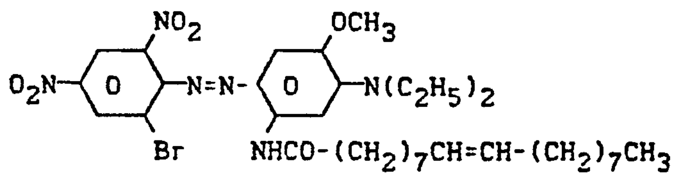 | grünst. Blau |
| Bsp. 44 | 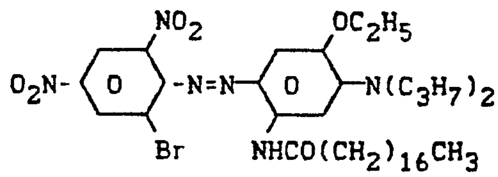 | grünst. Blau |
| Bsp. 45 | 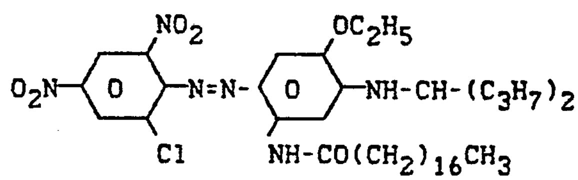 | grünst. Blau |
| Bsp. 46 | 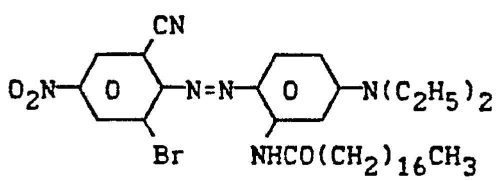 | rotst. Blau |
| Bsp. 47 | 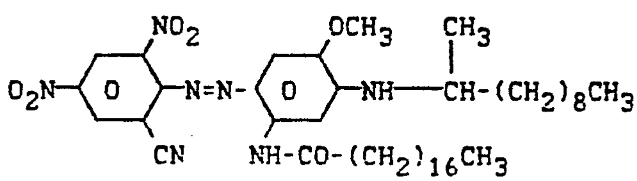 | Blau |
| Bsp. 48 | 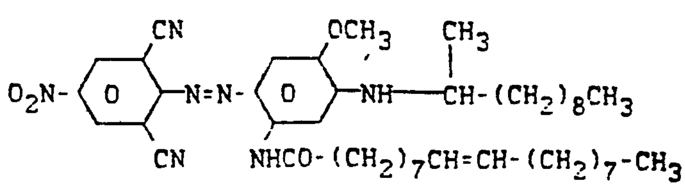 | Blau |

Tabelle 3 (Fortsetzung)

Farbton des Druckes

Bsp. 49 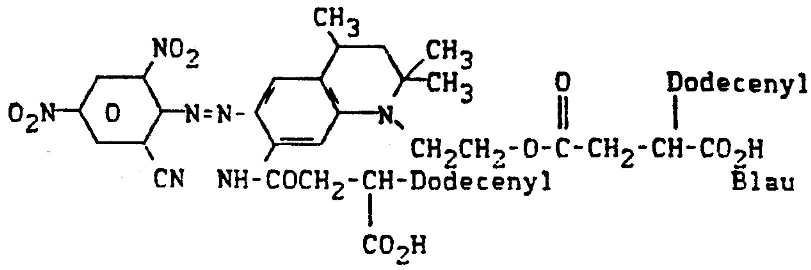 Blau

Bsp. 50 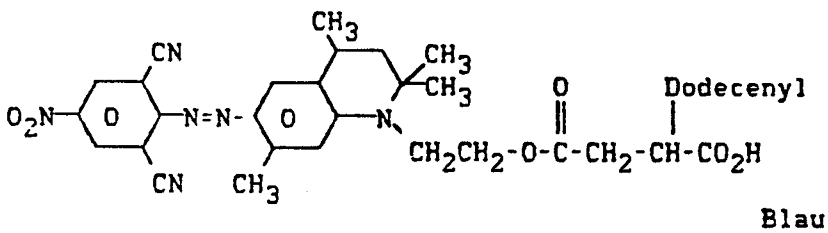 Blau

Bsp. 51 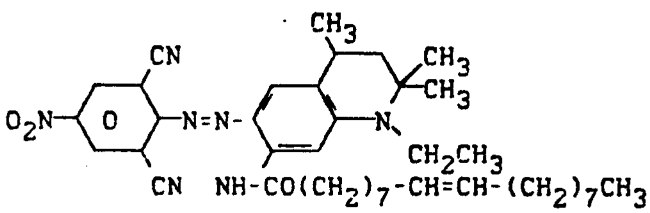 Blau

Bsp. 52 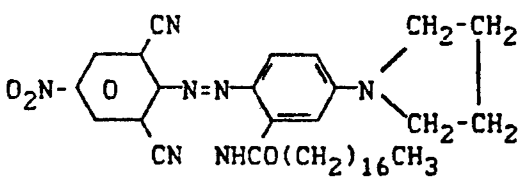 Blau

Bsp. 53 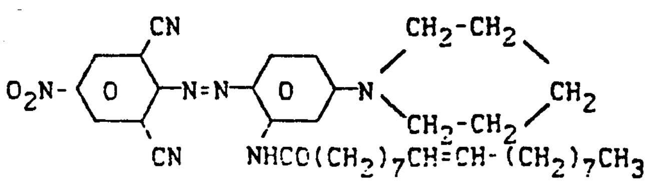 Blau

Tabelle 3 (Fortsetzung)

Farbton des Druckes

Bsp. 54 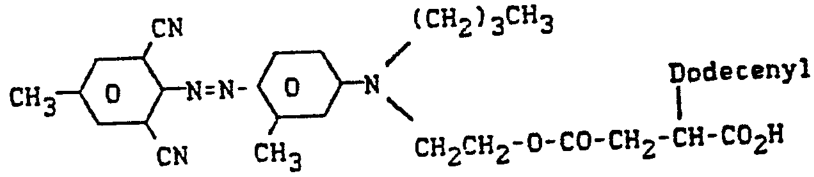

Rot

Bsp. 55 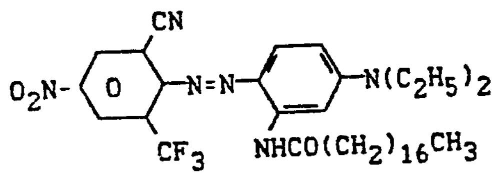

Blau

Bsp. 56 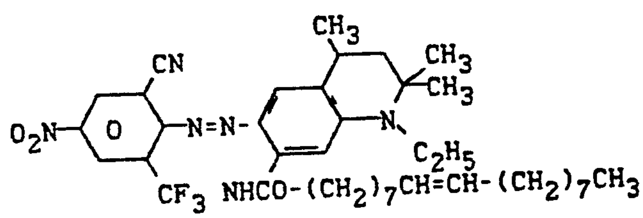

Blau

Bsp. 57 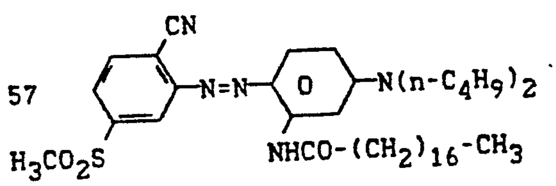

Rot

Bsp. 58 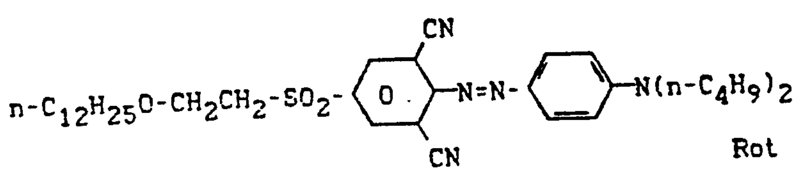

Rot

Tabelle 3 (Fortsetzung)

Farbton des Druckes

Bsp. 59 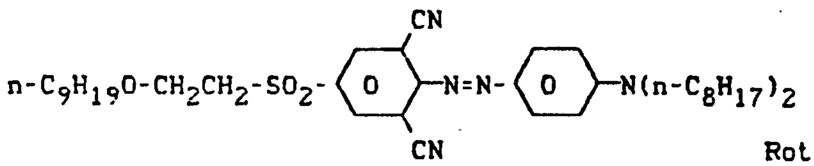

Rot

Bsp. 60 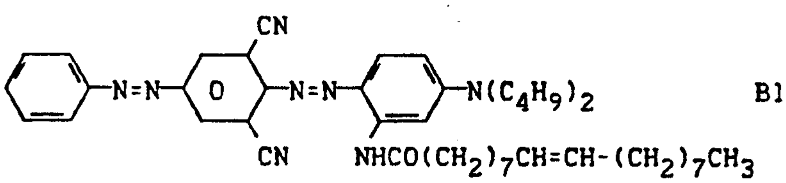

Blau

Bsp. 61 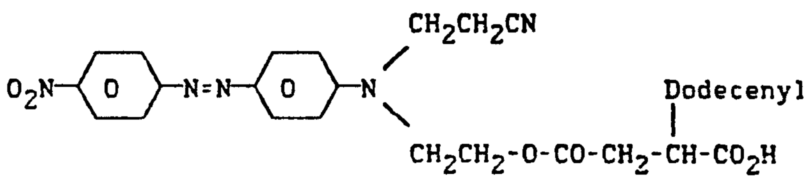

Orange

Bsp. 62 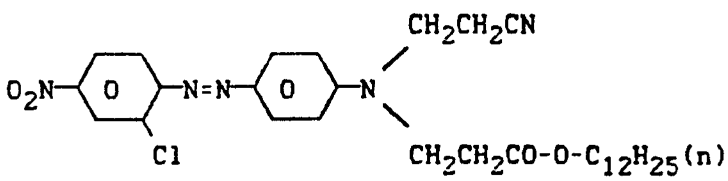

Scharlach

Bsp. 63 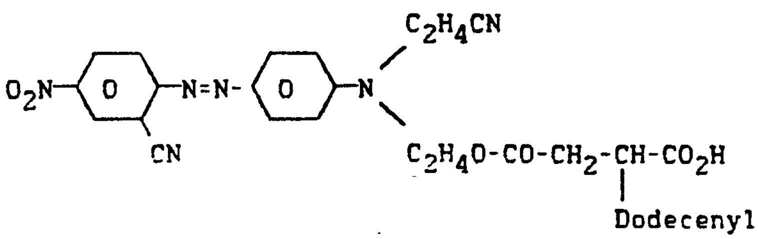

Rot

0211324

Tabelle 3 (Fortsetzung)

Farbton des Druckes

Bsp. 64 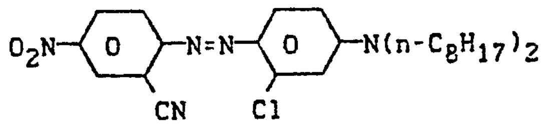 Rot

Bsp. 65 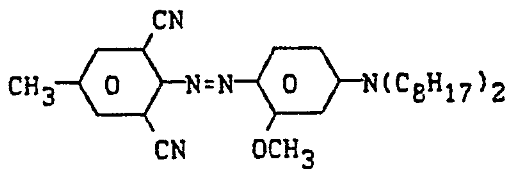 Rot

Bsp. 66 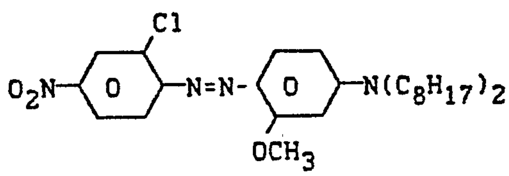 Rot

Patentansprüche

1. Verfahren zur Herstellung von Illustrationstiefdruckfarben, dadurch gekennzeichnet, daß man Farbstoffe der Formel

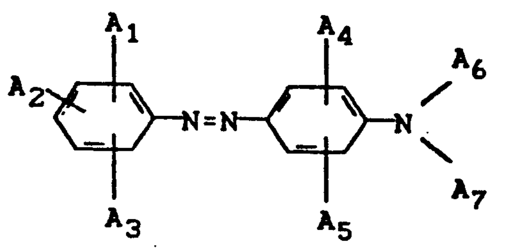

(I)

verwendet, in der

$A_1$, $A_2$, $A_3$ Wasserstoff, Halogen wie Cl, Br, F, -CN, $-NO_2$, $C_1$-$C_6$-Alkyl, insbesondere Methyl und Ethyl, Cycloalkyl, insbesondere Cyclohexyl und Cyclopentyl, $C_1$-$C_{18}$-Alkoxy, insbesondere Methoxy und Ethoxy, gegebenenfalls substituiertes Phenoxy, gegebenenfalls substituiertes $C_1$-$C_{18}$-Alkylsulfonyl, gegebenenfalls substituiertes Phenylsulfonyl, gegebenenfalls substituiertes Sulfamoyl, gegebenenfalls substituiertes Carbamoyl, gegebenenfalls substituiertes Phenylazo, $C_1$-$C_{18}$-Alkoxycarbonyl, $-CF_3$, -SCN, $C_1$-$C_{12}$-Alkylmercapto, $C_1$-$C_6$-Alkylcarbonyl, gegebenenfalls substituiertes Phenylcarbonyl, -OH,

$A_4$, $A_5$ Wasserstoff, Halogen wie Cl, Br, F, gegebenenfalls substituiertes $C_1$-$C_6$-Alkyl, insbesondere Methyl und Ethyl, gegebenenfalls substituiertes $C_1$-$C_6$-Alkoxy, insbesondere Methoxy und Ethoxy, $-NH-CO-CH_2CH_2OA_8$, $-NH-CO-A_8$, $-NH-CO-CH_2OA_8$, $NH-CO-O-A_9$, -NH-CO-A-COOH, $-NH-SO_2-A_8$,

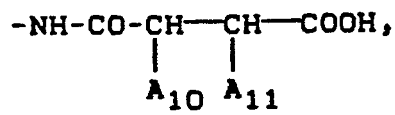, 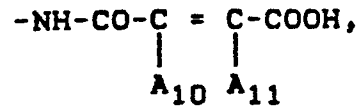,

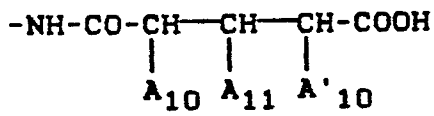

$A_8$ $C_1$-$C_{22}$-Alkyl, $C_2$-$C_{22}$-Alkenyl, $C_3$-$C_7$-Cycloalkyl, insbesondere Cyclopentyl und Cyclohexyl, Phenyl, Naphthyl, Phenyl-$C_1$-$C_4$-alkyl, wobei die genannten Arylreste z.B. durch $C_1$-$C_6$-Alkyl, $C_1$-$C_6$-Alkoxy, Cl. Br, F, $-NO_2$ und Cyclohexyl substituiert sein können,

$A_9$ $C_1$-$C_{22}$-Alkyl, $C_2$-$C_{22}$-Alkenyl, $C_3$-$C_7$-Cycloalkyl, Phenyl-$C_1$-$C_4$-alkyl,

$A_{10}$, $A'_{10}$, $A_{11}$ Wasserstoff, $C_1$-$C_{22}$-Alkyl, $C_2$-$C_{22}$-Alkenyl, vorzugsweise Dodecenyl,

A 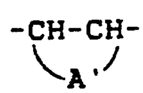 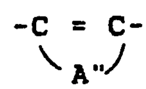

A', A" die restlichen Glieder eines gegebenenfalls durch $C_1$-$C_4$-Alkyl, insbesondere Methyl, Halogen wie Chlor, Brom, -COOH substituierten carbocyclischen 5- oder 6-gliedrigen Rings,

$A_6$ Aryl, vorzugsweise gegebenenfalls substituiertes Phenyl oder $A_7$

$A_7$ Wasserstoff oder aliphatische Reste, bezeichnen, wobei weiterhin die Reste

$A_4$ und $A_6$ auch zu einem, vorzugsweise sechsgliedrigen Ring, z.B. einem Tetrahydrochinolin- oder Benzomorpholin-Ring verbunden sein können und die Reste

$A_6$ und $A_7$ durch $-(CH_2)_n-$ (n = 4,5) oder $-(CH_2)_2$-O-$(CH_2)_2-$ ringgeschlossen sein können.

2. Verfahren gemäß Anspruch 1, dadurch gekennzeichnet, daß man Farbstoffe der Formel I verwendet, in der

$A_6$, $A_7$ für gegebenenfalls durch nicht-nachbarständige O-Atome unterbrochene und/oder substituierte $C_1$-$C_{22}$-Alkyl- und $C_2$-$C_{22}$-Alkenylreste oder $C_3$-$C_7$-Cycloalkylreste stehen.

3. Verfahren gemäß Anspruch 1, dadurch gekennzeichnet, daß man Farbstoffe der Formel I verwendet, in der

$A_6$, $A_7$ für gegebenenfalls durch nicht-nachbarständige O-Atome unterbrochenes $C_1$-$C_{22}$-Alkyl oder $C_2$-$C_{22}$-Alkenyl stehen, wobei diese Reste durch -OH, -CN, -O-CO-A-COOH,

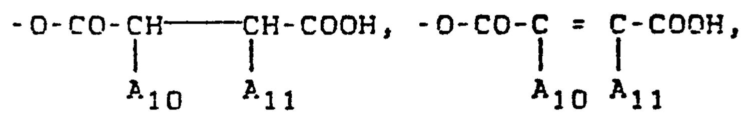

-OCO-$A_8$, -O-COO-$A_9$, -COO$A_9$ und -O$A_{12}$ substituiert sein können, wobei

$A_{12}$ für $C_3$-$C_7$-Cycloalkyl, insbesondere Cyclopentyl und Cyclohexyl, Phenyl, Naphthyl und Phenyl-$C_1$-$C_4$-alkyl steht.

4. Verfahren gemäß Anspruch 1, dadurch gekennzeichnet, daß man Farbstoffe der Formeln

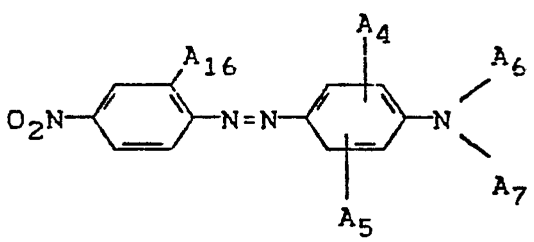

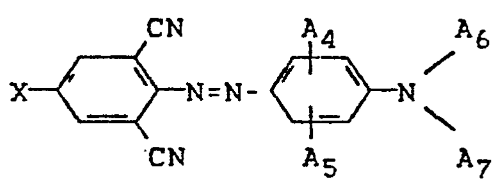

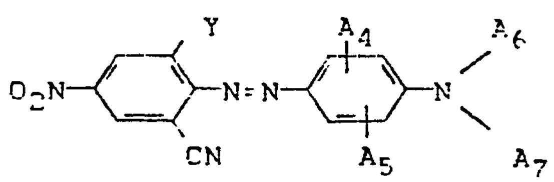

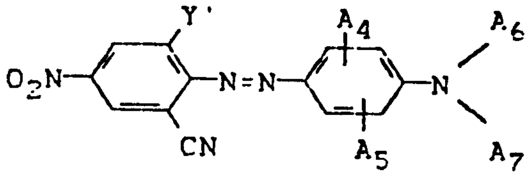

in der $A_{16}$ Cl, Br, CN,

X H, $CH_3$, $C_2H_5$, $C_6H_{12}$,, $-C(CH_3)_3$, $C_1$-$C_4$-Alkoxy, Cl, Br,

Y $-NO_2$, -CN, $-CF_3$, $-C_1$-$C_{12}$-Alkylsulfonyl und

Y' $-NO_2$, -CN bezeichnen, verwendet.

5. Verfahren gemäß Anspruch 1, dadurch gekennzeichnet, daß man Farbstoffe der Formel

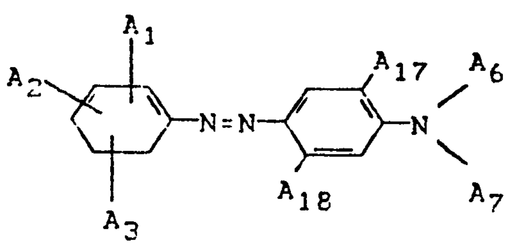

in der

$A_{17}$ Wasserstoff, Chlor, $C_1$-$C_4$-Alkyl, insbesondere Methyl und Ethyl und $C_1$-$C_4$-Alkoxy, insbesondere Methoxy und Ethoxy

$A_{18}$ $-NH-CO-CH_2CH_2-OA_8$, $-NH-CO-A_8$, $-NH-CO-O-A_9$,

$-NH-CO-A-COOH$, $-NH-COCH_2-OA_8$

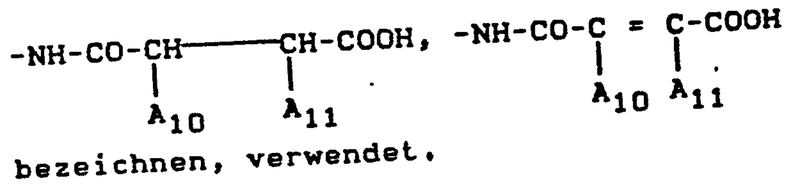

bezeichnen, verwendet.

6. Verfahren gemäß den Ansprüchen 1-5, dadurch gekennzeichnet, daß man Farbstoffe der Formeln

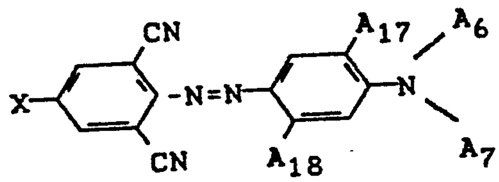

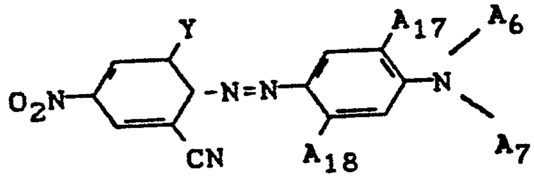

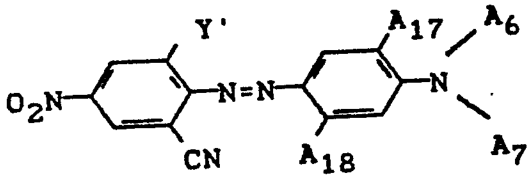

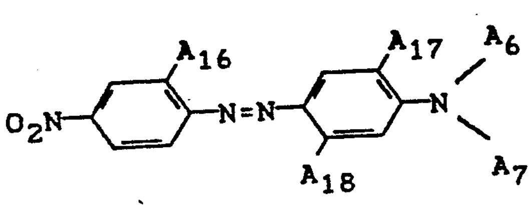

(II)

verwendet.

7. Farbstoffe der Formel

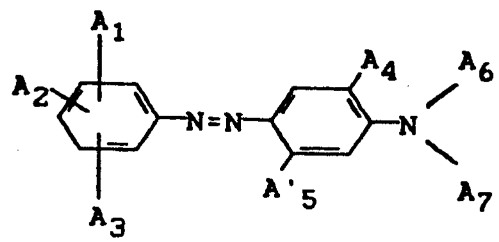

(III)

in der

$A_1$, $A_2$, $A_3$ Wasserstoff, Halogen wie Cl, Br, F, -CN, $-NO_2$, $C_1$-$C_6$-Alkyl, insbesondere Methyl und Ethyl, Cycloalkyl, insbesondere Cyclohexyl und Cyclopentyl, $C_1$-$C_6$-Alkoxy, insbesondere Methoxy und Ethoxy, gegebenenfalls substituiertes Phenoxy, gegebenenfalls substituiertes $C_1$-$C_6$-Alkylsulfonyl, gegebenenfalls substituiertes Phenylsulfonyl, gegebenenfalls substituiertes Sulfamoyl, gegebenenfalls substituiertes Carbamoyl, gegebenenfalls substituiertes Phenylazo, $C_1$-$C_6$-Alkoxycarbonyl, $-CF_3$, -SCN, $C_1$-$C_{12}$-Alkylmercapto, $C_1$-$C_6$-Alkylcarbonyl, gegebenenfalls substituiertes Phenylcarbonyl, -OH,

$A_4$ Wasserstoff, Halogen wie Cl, Br, F, gegebenenfalls substituiertes $C_1$-$C_6$-Alkyl, insbesondere Methyl und Ethyl,

gegebenenfalls substituiertes $C_1$-$C_6$-Alkoxy, insbesondere Methoxy und Ethoxy, $-NH-CO-CH_2CH_2OA_8$, $-NH-CO-A_8$, $NH-CO-O-A_9$, -NH-CO-A-COOH, $-NH-SO_2A_8$,

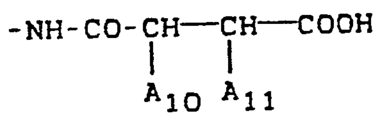, 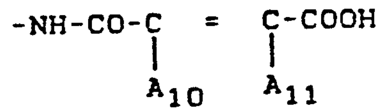,

A'5 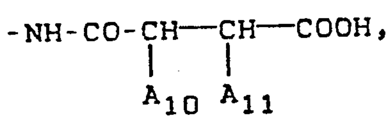, 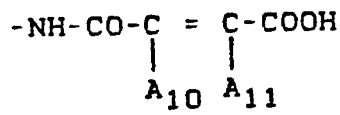,

$A_8$ $C_1$-$C_{21}$-Alkyl, $C_2$-$C_{21}$-Alkenyl, $C_3$-$C_7$-Cycloalkyl, insbesondere Cyclopentyl und Cyclohexyl, Phenyl, Naphthyl, Phenyl-$C_1$-$C_4$-alkyl,

$A_9$ $C_1$-$C_{22}$-Alkyl, $C_2$-$C_{22}$-Alkenyl, $C_3$-$C_7$-Cycloalkyl, Phenyl-$C_1$-$C_4$-alkyl,

$A_{10}$, $A_{11}$ Wasserstoff, $C_1$-$C_{22}$-Alkyl, $C_2$-$C_{22}$-Alkenyl, vorzugsweise Dodecenyl, wobei für den Fall, daß $A_{10}$ = H, $A_{11} \neq$ H und für den Fall, daß $A_{11}$ = H, $A_{10} \neq$ H ist,

A 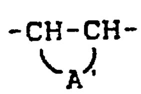 , 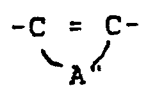 ,

A', A" die restlichen Glieder eines gegebenenfalls durch $C_1$-$C_4$-Alkyl, insbesondere Methyl, Halogen wie Chlor, Brom, -COOH substituierten carbocyclischen 5- oder 6-gliedrigen Rings,

$A_6$ Aryl, vorzugsweise gegebenenfalls substituiertes Phenyl oder $A_7$

$A_7$ Wasserstoff oder aliphatische Reste, wobei weiterhin die Reste

$A_4$ und $A_6$ auch zu einem vorzugsweise sechsgliedrigen Ring, z.B. einen Tetrahydrochinolin- oder Benzomorpholin-Ring verbunden sein können und die Reste

$A_6$ und $A_7$ durch $-(CH_2)_n-$ (n = 4,5) oder $-(CH_2)_2-O(CH_2)_2-$ ringgeschlossen sein können und

$A_5'$ 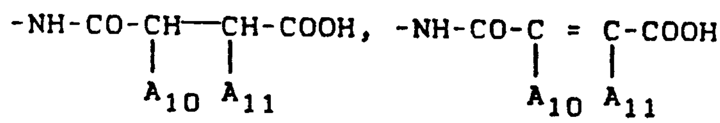

bezeichnen.

8. Farbstoffe der Formeln

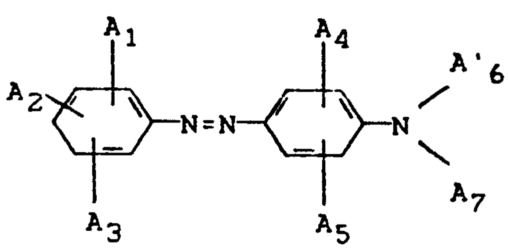 (IV)

in denen

$A_1$, $A_2$, $A_3$ Wasserstoff, Halogen wie Cl, Br, F, -CN, $-NO_2$, $C_1$-$C_6$-Alkyl, insbesondere Methyl und Ethyl, Cycloalkyl, insbe-

sondere Cyclohexyl und Cyclopentyl, $C_1$-$C_6$-Alkoxy, insbesondere Methoxy und Ethoxy, gegebenenfalls substituiertes Phenoxy, gegebenenfalls substituiertes $C_1$-$C_6$-Alkylsulfonyl, gegebenenfalls substituiertes Phenylsulfonyl, gegebenenfalls substituiertes Sulfamoyl, gegebenenfalls substituiertes Carbamoyl, gegebenenfalls substituiertes Phenylazo, $C_1$-$C_6$-Alkoxycarbonyl, $-CF_3$, -SCN, $C_1$-$C_{12}$-Alkylmercapto, $C_1$-$C_6$-Alkylcarbonyl, gegebenenfalls substituiertes Phenylcarbonyl, -OH,

$A_4$, $A_5$ Wasserstoff, Halogen wie Cl, Br, F, gegebenenfalls substituiertes $C_1$-$C_6$-Alkyl, insbesondere Methyl und Ethyl, gegebenenfalls substituiertes $C_1$-$C_6$-Alkoxy, insbesondere Methoxy und Ethoxy, $-NH-CO-CH_2CH_2OA_8$, $-NH-CO-A_8$, $NH-CO-O-A_9$, -NH-CO-A-COOH, $-NH-SO_2A_8$,

$$-NH-CO-\underset{A_{10}}{\underset{|}{CH}}-\underset{A_{11}}{\underset{|}{CH}}-COOH, \quad -NH-CO-\underset{A_{10}}{\underset{|}{C}}=\underset{A_{11}}{\underset{|}{C}}-COOH,$$

$A_8$ $C_1$-$C_{21}$-Alkyl, $C_2$-$C_{21}$-Alkenyl, $C_3$-$C_7$-Cycloalkyl, insbesondere Cyclopentyl und Cyclohexyl, Phenyl, Naphthyl, Phenyl-$C_1$-$C_4$-alkyl,

$A_9$ $C_1$-$C_{22}$-Alkyl, $C_2$-$C_{22}$-Alkenyl, $C_3$-$C_7$-Cycloalkyl, Phenyl-$C_1$-$C_4$-alkyl,

$A_{10}$, $A_{11}$ Wasserstoff, $C_1$-$C_{22}$-Alkyl, $C_2$-$C_{22}$-Alkenyl, vorzugsweise Dodecenyl, wobei für den Fall, daß $A_{10}$ = H, $A_{11}$ ≠ H und für den Fall, daß $A_{11}$ = H, $A_{10}$ ≠ H ist,

A 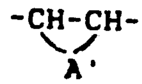 , 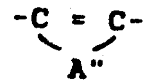 ,

A', A" die restlichen Glieder eines gegebenenfalls durch $C_1$-$C_4$-Alkyl, insbesondere Methyl, Halogen wie Chlor, Brom, -COOH substituierten carbocyclischen 5- oder 6-gliedrigen Rings,

$A_7$ Wasserstoff oder aliphatische Reste bezeichnen - und

$A_6$' für einen durch -O-CO-A-COOH,

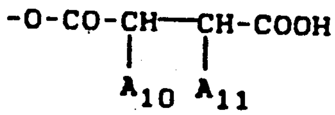, 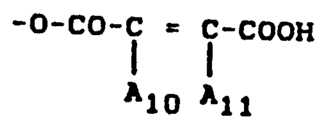 substituierten $C_1$-$C_{22}$-Alkyl oder $C_2$-$C_{22}$-Alkenylrest oder insbesondere einen Rest

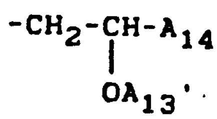

steht, wobei

$A_{13}$' -CO-A-COOH, 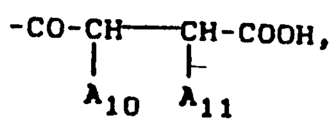, 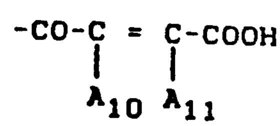

bezeichnet.

0211324

9. Verfahren zur Herstellung von Illustrationstiefdruckfarben gemäß den Ansprüchen 1 bis 8, dadurch gekennzeichnet, daß man Azofarbstoff-Pigment-Gemische verwendet.

10. Verfahren gemäß den Ansprüchen 1 bis 9 zur Herstellung von Illustrationstiefdruckfarben auf Toluolbasis.